# EUROPÄISCHE PATENTSCHRIFT

(11) **EP 0 936 437 B1**
(45) Veröffentlichungstag und Bekanntmachung des Hinweises auf die Patenterteilung: **16.04.2003**
(21) Anmeldenummer: 98123976.7
(22) Anmeldetag: 17.12.1998
(51) Int. Cl.: G01B 5/00

(54) **Verstellbarer Messuhrhalter**
Adjustable dial gauge holder
Support ajustable pour un comparateur

(30) Priorität: 12.02.1998 DE 19805648
(43) Veröffentlichungstag der Anmeldung: 18.08.1999
(73) Patentinhaber: Hörger und Gässler OHG, 89567 Sontheim (DE)
(72) Erfinder: Hörger, Hans, 89567 Sontheim (DE)
(74) Vertreter: Lorenz, Werner, Dr.-Ing.

(56) Entgegenhaltungen:
- EP-B- 0 428 637
- JP-A- 61 022 201
- US-A- 3 203 656
- US-A- 4 781 351
- US-A- 5 012 592

## Beschreibung

Die Erfindung betrifft eine Halteeinrichtung für Meßuhren mit einem Grundkörper, welcher mindestens eine Aufnahme für eine Meßuhr aufweist, mit einem Verbindungsteil, über welches der Grundkörper mit einem Stativ oder ähnlichem verbindbar ist, und mit einem Verstellmechanismus zur Verstellung des Winkels zwischen dem Grundkörper und dem Verbindungsteil.

Eine gattungsgemäße Halteeinrichtung für Meßuhren ist aus der EP 0 428 637 B1 bekannt. Hierbei ist das Verbindungsteil einstückig mit dem Grundkörper ausgebildet und stellt eine Feder für die Halteeinrichtung dar. Es wird lediglich eine Stellschraube verwendet, um die gesamte Halteeinrichtung zu kippen und somit die Meßuhr einzustellen. zur Fertigung ist ein hoher Aufwand erforderlich.

Aus der JP-A-61-22201 ist ein Stativ zur Halterung von Meßuhren bekannt, bei welchem ein Stativteil gegenüber dem anderen Stativteil mittels eines Kugelgelenks verschwenkt werden kann.

Die US-A-5012592 beschreibt eine Meßmaschine mit mehreren gegeneinander verstellbaren Einzelteilen, welche über Zapfen gelagert und dadurch gegeneinander verschwenkbar sind.

Aus dem allgemeinen Stand der Technik ist außerdem eine Halteeinrichtung für Meßuhren bekannt, bei der das Verbindungsteil einerseits zur Verbindung der Halteeinrichtung mit dem Stativ dient, andererseits jedoch auch über eine Schraubverbindung und ein an der Schraubverbindung sich befindliches Federpaket mit dem Grundkörper verbunden ist. Durch diese federnde Schraubverbindung wird das Verbindungsteil gegenüber dem Grundkörper vorgespannt. In dem Grundkörper befindet sich in einem parallel zu dem Verbindungsteil verlaufenden Ausleger desselben eine weitere Gewindebohrung, in welcher eine Stellschraube eingeschraubt ist, durch deren Verdrehung der Winkel zwischen dem Verbindungsteil und dem Grundkörper gegen die Federkraft verändert werden kann.

Die Veränderung der Winkellage des Verbindungsteils resultiert in einer Kippbewegung desselben, wobei meist zwischen dem Grundkörper und dem Verbindungsteil angeordnete Kugeln als Drehpunkt dienen. Durch die Kippbewegung des Verbindungsteils wird der Grundkörper und somit die Meßuhr gegenüber dem Stativ verstellt, was zum Einstellen einer bestimmten Anzeige der Meßuhr notwendig ist.

Eine weitere Möglichkeit, die Kippbewegung des Verbindungsteils zu erreichen, kann gemäß einem weiteren allgemeinen Stand der Technik durch einen Stift zwischen dem Grundkörper und dem Verbindungsteil realisiert werden.

Bei einer eventuellen Nachgiebigkeit des Federpakets wird das Verbindungsteil in unkontrollierter Art und Weise gekippt Somit kann das Meßergebnis verfälscht werden.

Der Grundkörper und das verbindungsteil stullen zwei separate Bauteile dar. Somit kann jedes der beiden Teile beim täglichen Gebrauch verlorengehen.

Es ist daher Aufgabe der vorliegenden Erfindung, eine Halteeinrichtung für Meßuhren zu schaffen, welche einfach herzustellen ist, durch welche bessere Meßergebnisse erzielt werden können und welche für den täglichen Gebrauch besser geeignet ist, insbesondere was die Anzahl der Teile betrifft.

Erfindungsgemäß wird diese Aufgabe nach dem Anspruch 1 gelöst.

Durch die erfindungsgemäße spielfreie Verbindung des Vorsprungs des Verbindungsteils mit der Ausnehmung des Grundkörpers kann auch bei einer eventuellen Nachgiebigkeit der Feder das Verbindungsteil nicht mehr durch äußere Einflüsse gekippt werden. Es ist nur noch eine Verstellung über die Stellschraube möglich, wodurch sich genauere Meßergebnisse bei der Verwendung der Meßuhr ergeben.

Ein weiterer Vorteil der Verbindung ist, daß auch beim vollständigen Lösen der weiteren Verbindungseinrichtung, also der Schraube mit dem Federpaket, das Verbindungsteil noch immer fest mit dem Grundkörper verbunden ist und beide Teile somit nicht mehr so leicht verlorengehen können.

Wenn in einer vorteilhaften Ausführungsform der Erfindung die Ausnehmung und der Vorsprung jeweils im Querschnitt wenigstens annähernd kreisförmig bzw. teilkreisförmig und mit wenigstens annähernd gleichem Durchmesser ausgebildet sind, kann das Verbindungsteil sehr einfach gegenüber dem Grundkörper verdreht bzw. gekippt werden.

In einer weiteren vorteilhaften Ausführungsform der Erfindung kann vorgesehen sein, daß die Ausnehmung in dem Grundkörper als Bohrung ausgeführt ist, die sich teilweise innerhalb des Grundkörpers befindet, und zwar in einem Kreissegmentbereich, der einen Winkel zwischen 180° und 360° abdeckt.

Dies stellt eine besonders günstige Ausführungsform der Ausnehmung dar, die somit nämlich in einfacher Weise durch Herstellen einer Bohrung in den Grundkörper und anschließendes Abfräsen desjenigen Bereiches, in dem das Verbindungsteil angebracht wird, hergestellt werden kann.

Eine noch bessere Verdrehbarkeit des Verbindungsteils kann sich ergeben, wenn der Vorsprung über einen halsartigen Verbindungssteg mit dem Verbindungsteil verbunden ist.

Wenn das Verbindungsteil über ein Gewinde mit dem Stativ verbunden ist, ergibt sich eine besonders einfache Anbindung der gesamten Halteeinrichtung an ein Stativ oder eine ähnliche Einrichtung.

Nachfolgend ist ein Ausführungsbeispiel der Erfindung anhand der Zeichnung prinzipmäßig beschrieben.

Es zeigt:
- Fig. 1: Eine Draufsicht auf die erfindungsgemäße Halteeinrichtung; und
- Fig. 2: einen Schnitt nach der Linie II-II aus Fig.1.

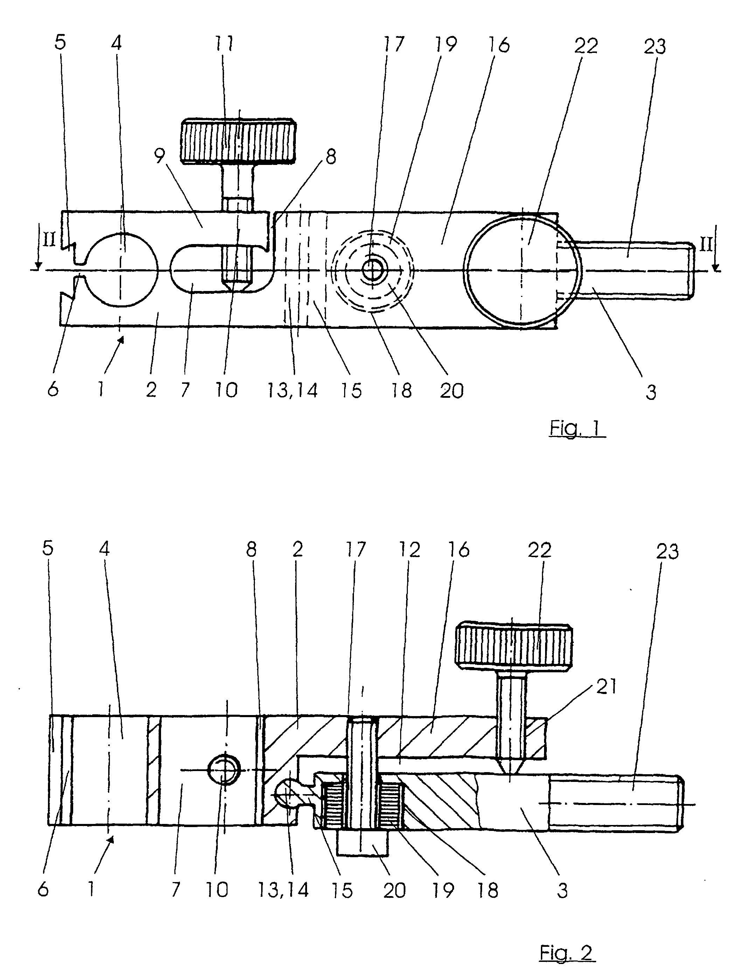

Fig. 1 zeigt eine Halteeinrichtung 1 für eine nicht dargestellte Meßuhr. Die Halteeinrichtung 1 ist aus einem länglichen Grundkörper 2 und einem mit dem Grundkörper 2 verbundenen ebenfalls länglichen Verbindungsteil 3 aufgebaut.

Der Grundkörper 2 ist mit einer Aufnahme in Form einer Bohrung 4 zum Aufnehmen der Meßuhr sowie mit einer zu der Bohrung 4 benachbart angeordneten Schwalbenschwanzführung 5 zum Anbringen eines Halters für eine weitere Meßuhr versehen. Die Bohrung 4 und die durch Fräsen hergestellte Schwalbenschwanzführung 5 weisen parallele Längsachsen auf und die Bohrung 4 ist mit der Schwalbenschwanzführung 5 über einen durchgehenden Schlitz 6 verbunden.

Der Grundkörper 2 besitzt eine weitere, in diesem Fall als Langloch 7 ausgebildete Ausnehmung, die ebenfalls benachbart zu der Bohrung 4, jedoch auf der der Schwalbenschwanzführung 5 gegenüberliegenden Seite derselben angeordnet ist und ebenfalls in derselben Richtung wie die Bohrung 4 und die Schwalbenschwanzführung 5 orientiert ist.

Durch einen Schlitz 8 in dem Grundkörper 2 steht das Langloch 7 mit der Außenfläche des Grundkörpers 2 in Verbindung. Durch das Langloch 7 und den Schlitz 8 ergibt sich an dem Grundkörper 2 somit ein nasenartiger Vorsprung 9, der mit einer senkrecht zu dem Langloch 7 angeordneten Gewindebohrung 10 und einer sich darin befindlichen Schraube 11 versehen ist. Durch Verdrehen der Schraube 11, welche vollständig durch die Gewindebohrung 10 durchgeführt ist und an der gegenüberliegenden Seite des Langloches 7 wiederum an dem Grundkörper 2 anliegt, kann der Vorsprung 9 aufgebogen werden. Dadurch wird wiederum der Durchmesser der Bohrung 4 in geringem Umfang verkleinert und eine in der Bohrung 4 sich befindliche Meßuhr kann geklemmt werden. Gleichzeitig wird durch Anziehen der Schraube 11 auch ein in der Schwalbenschwanzführung 5 sich befindliches Element geklemmt.

An der der Schwalbenschwanzführung 5 gegenüberliegenden Seite weist der Grundkörper 2 über seine gesamte Breite eine z.B. durch Fräsen hergestellte Aussparung 12 auf, wobei die Fräsrichtung senkrecht zu derjenigen der Schwalbenschwanzführung 5 ist. An der Kante zwischen dem Grundkörper 2 und der Aussparung 12 befindet sich eine als kreisrunde Bohrung 13 ausgebildete Ausnehmung. Bei der Herstellung der Halteeinrichtung 1 wird die Bohrung 13 zunächst in den Grundkörper 2 gebohrt, worauf die Aussparung 12 abgefräst wird. Dadurch verbleibt von der Bohrung 13 nur noch ein Kreissegmentbereich mit einem Winkel zwischen 180° und 360° in dem Grundkörper 2. In diesem Fall beträgt der Winkel ca. 220°.

Das Verbindungsteil 3 ist mit einem länglichen Vorsprung 14 versehen, der wie die Bohrung 13 teilkreisförmig ausgeführt ist, bezüglich seines Durchmessers an dieselbe angepaßt ist und, wie in Fig. 2 dargestellt, sich in derselben befindet. Das Einführen bzw. Einrücken des Vorsprungs 14 in die Bohrung 13 geschieht dabei durch einfaches Einschieben von der Seite.

Der Vorsprung 14 ist mit dem Verbindungsteil 3 über einen halsartigen Verbindungssteg 15 verbunden. Durch diese Verbindung kann das Verbindungsteil 3 gegenüber dem Grundkörper 2 verschwenkt werden.

Parallel zu dem Verbindungsteil 3 verläuft unterhalb der Ausnehmung 12 ein durch das Abfräsen der Aussparung 12 entstandener Ausleger 16. Der Ausleger 16 und das Verbindungsteil 3 sind zueinander parallel, wenn das Verbindungsteil 3 seine Grundstellung einnimmt.

In dem Ausleger 16 befindet sich eine Gewindebohrung 17, die mit einer zweistufigen Bohrung 18 in dem Verbindungsteil 3 fluchtet. Innerhalb der Bohrung 18 sind ein Federpaket 19, in diesem Fall bestehend aus einzelnen Tellerfedern, sowie eine Schraube 20 angeordnet. Durch Einschrauben der Schraube 20 in die Gewindebohrung 17 und Anziehen derselben kann das Verbindungsteil 3 gegenüber dem Grundkörper 2 vorgespannt werden. Dabei ist die Schraube 20 im vorliegenden Fall so nah wie möglich an dem Vorsprung 14 angeordnet.

In dem Ausleger 16 befindet sich an einer von der Schraube 20 entfernten Stelle eine weitere Gewindebohrung 21, in welcher eine Stellschraube 22 eingeschraubt ist. Die Stellschraube 22 wird von der dem Verbindungsteil 3 gegenüberliegenden Seite in den Ausleger 16 so weit eingeschraubt, daß sie an dem Verbindungsteil 3 anliegt und bei einer weiteren Einschraubung zur Verstellung des Winkels zwischen dem Verbindungsteil 3 und dem Grundkörper 2 dient.

Das Verbindungsteil 3 ist an dem von dem Vorsprung 14 entfernten Ende mit einem Gewinde 23 versehen, mit welchem es mit einem nicht dargestellten Stativ verbunden werden kann.

Bei ihrem Einsatz wird die Halteeinrichtung 1 über das Gewinde 23 an einem Stativ befestigt. In die Bohrung 4 wird eine Meßuhr eingesetzt und durch die Schraube 11 geklemmt. Zur Verstellung der Meßuhr wird die Stellschraube 22 verdreht, wodurch das Verbindungsteil 3 gegenüber dem Grundkörper 2 und somit der Grundkörper 2 gegenüber dem Stativ gekippt wird. Das Zentrum dieser Kippbewegung ist hierbei die Verbindung zwischen der Bohrung 13 und dem Vorsprung 14. Letztendlich kann somit die Meßuhr gegenüber dem Stativ verstellt werden.

## Patentansprüche

1. Halteeinrichtung (1) für Meßuhren mit einem Grundkörper (2), welcher mindestens eine Aufnahme (4) für eine Meßuhr aufweist, mit einem Verbindungsteil (3), über welches der Grundkörper (2) mit einem Stativ oder ähnlichem verbindbar ist, und mit einem Verstellmechanismus (21, 22) zur Verstellung des Winkels zwischen dem Grundkörper (2) und dem Verbindungsteil (3),
**dadurch gekennzeichnet, daß**
der Grundkörper (2) mit einer Ausnehmung (13) versehen ist, daß das Verbindungsteil (3) mit einem Vorsprung (14) versehen ist, welcher in die Ausnehmung (13) des Grundkörpers (2) eingerückt ist, und daß das Verbindungsteil (3) über eine Vorspanneinrichtung (17, 20) mit dem Grundkörper (2) verbunden ist.

2. Halteeinrichtung nach Anspruch 1,
**dadurch gekennzeichnet, daß**
die Ausnehmung (13) und der Vorsprung (14) jeweils im Querschnitt wenigstens annähernd teilkreisförmig und mit wenigstens annähernd gleichem Durchmesser ausgebildet sind.

3. Halteeinrichtung nach Anspruch 2,
**dadurch gekennzeichnet, daß**
die Ausnehmung in dem Grundkörper (2) als Bohrung (13) ausgeführt ist, die sich teilweise innerhalb des Grundkörpers (2) befindet, und zwar in einem Kreissegmentbereich, der einen Winkel zwischen 180° und 360° abdeckt.

4. Halteeinrichtung nach einem der Ansprüche 1 bis 3,
**dadurch gekennzeichnet, daß**
der Vorsprung (14) über einen halsartigen Verbindungssteg (15) mit dem Verbindungsteil (3) verbunden ist.

5. Halteeinrichtung nach einem der Ansprüche 1 bis 4,
**dadurch gekennzeichnet, daß**
das Verbindungsteil (3) über ein Gewinde (23) mit dem Stativ verbunden ist.

## Claims

1. A holding device (1) for dial gauges, having a base body (2) which has at least one receiving means (4) for a dial gauge, having a connecting part (3) by way of which the base body (2) may be connected to a stand or the like, and having an adjusting mechanism (21, 22) for adjusting the angle between the base body (2) and the connecting part (3),
**characterised in that** the base body (2) is provided with a cutout (13), **in that** the connecting part (3) is. provided with a projection (14), which is inserted into the cutout (13) in the base body (2), and **in that** the connecting part (3) is connected to the base body (2) by way of a pretensioning device (17, 20).

2. A holding device according to Claim 1,
**characterised in that** the cutout (13) and the projection (14) are each at least approximately part-circular in cross-section and are constructed with at least approximately the same diameter.

3. A holding device according to Claim 2,
**characterised in that** the cutout in the base body (2) is designed as a bore (13) which is located partially within the base body (2), and more precisely in a circle-segment region covering an angle between 180° and 360°.

4. A holding device according to one of Claims 1 to 3,
**characterised in that** the projection (14) is connected to the connecting part (3) by way of a neck-like connecting web (15).

5. A holding device according to one of Claims 1 to 4,
**characterised in that** the connecting part (3) is connected to the stand by way of a thread (23).

## Revendications

1. Dispositif de support (1) pour comparateurs, comprenant un corps de base (2) qui comporte au moins un logement (4) pour un comparateur, un élément de liaison (3) par l'intermédiaire duquel le corps de base (2) peut être assemblé à un statif ou analogue, et un mécanisme de réglage (21, 22) servant à régler l'angle entre le corps de base (2) et l'élément de liaison (3),
**caractérisé en ce que**
le corps de base (2) est pourvu d'un évidement (13), **en ce que** l'élément de liaison (3) est pourvu d'une protubérance (14) qui est engagée dans l'évidement (13) du corps de base (2), et **en ce que** l'élément de liaison (3) est relié au corps de base (2) par l'intermédiaire d'un dispositif de précontrainte (17, 20).

2. Dispositif de support selon la revendication 1,
**caractérisé en ce que**
l'évidement (13) et la protubérance (14) ont chacun au moins approximativement une forme de partie de cercle en section transversale et ont au moins approximativement le même diamètre.

3. Dispositif de support selon la revendication 2,
**caractérisé en ce que**
l'évidement est réalisé dans le corps de base (2) sous la forme d'un alésage (13) qui se trouve partiellement à l'intérieur du corps de base (2), plus précisément dans une région de secteur de cercle qui couvre un angle entre 180° et 360°.

4. Dispositif de support selon l'une des revendications 1 à 3,
**caractérisé en ce que**
la protubérance (14) est reliée à l'élément de liaison (3) par l'intermédiaire d'une patte de liaison (15) en forme de col.

5. Dispositif de support selon l'une des revendications 1 à 4,
**caractérisé en ce que**
l'élément de liaison (3) est relié au statif par l'intermédiaire d'un filetage (23).
